# FASCICULE DE BREVET EUROPEEN

(11) **EP 2 676 114 B1**
(45) Date de publication et mention de la délivrance du brevet: **22.10.2014**
(21) Numéro de dépôt: 12708566.0
(22) Date de dépôt: 07.02.2012
(51) Int. Cl.: G01M 13/02, G01B 5/20

(54) **PROCÉDÉ DE CONTRÔLE DYNAMIQUE DE LA DENTURE D'UNE PIÈCE ET DISPOSITIF DE CONTRÔLE METTANT EN OEUVRE LEDIT PROCÉDÉ**
VERFAHREN ZUR DYNAMISCHEN KONTROLLE DER ZÄHNE EINES WERKSTÜCKS UND ÜBERPRÜFUNGSVORRICHTUNG MIT DIESEM VERFAHREN
METHOD FOR DYNAMICALLY CHECKING THE TEETH OF A PART AND CHECKING DEVICE USING SAID METHOD

(30) Priorité: 16.02.2011 FR 1151254
(43) Date de publication de la demande: 25.12.2013
(73) Titulaire: Thyssenkrupp System Engineering S.a.s., 68190 Ensisheim (FR)
(72) Inventeur: FELS, Eric, F-68500 Issenheim (FR); SCHMITT, Hubert, F-68720 Zillisheim (FR)
(74) Mandataire: Koelbel, Caroline
(86) Numéro de dépôt international: PCT/FR2012/000048
(87) Numéro de publication internationale: WO 2012/110712

(56) Documents cités:
- US-A- 2 780 007
- US-A- 4 704 799
- US-A1- 2003 037 626
- US-A1- 2005 247 132
- US-A1- 2006 254 055
- US-A1- 2008 028 847

## Description

### Domaine technique:

La présente invention concerne un procédé de contrôle dynamique de la denture d'une pièce définie au moins par son module, son diamètre nominal et son profil de dents, procédé dans lequel on monte ladite pièce à contrôler sur une première broche motorisée et contrôlée angulairement par un premier codeur, on monte un pignon étalon sur une seconde broche motorisée et contrôlée angulairement par un second codeur, les deux broches étant parallèles et séparées d'un entraxe permettant au pignon étalon d'engrener la pièce à contrôler, on mesure les écarts angulaires entre les deux broches en utilisant les informations délivrées par les codeurs, on traite lesdites informations par un calculateur et on déduit de ces écarts d'éventuels défauts de la denture. Elle concerne également un dispositif de contrôle permettant de mettre en oeuvre ledit procédé.

### Technique antérieure :

Les engrenages sont largement utilisés dans toutes les branches de la mécanique pour transmettre des mouvements, de l'horlogerie jusqu'à l'industrie lourde, en passant par le transport et l'automobile (boîte de vitesses, pompes à engrenage, etc.). Ces engrenages doivent être de qualité convenable et constante. Il faut donc contrôler unitairement les roues dentées, les pignons dentés, les arbres dentés ou similaires après usinage, sur les lignes de fabrication. Dans la suite du texte, on utilisera le terme générique « pièce(s) » pour couvrir toutes les pièces pouvant entrer dans un engrenage, une transmission par pignon/crémaillère ou similaire.

La solution classique consiste à contrôler ces pièces en sortie de fabrication, soit manuellement, soit dans un service de métrologie, sur des machines de mesure tridimensionnelle. Toutefois, cette solution est à ce jour inappropriée pour les raisons suivantes : il s'agit d'un processus de contrôle discontinu, réalisé en mode statique, qui nécessite un temps de contrôle relativement long et génère un retard préjudiciable sur la ligne de fabrication pour agir sur la machine de taille en vu de corriger les défauts détectés, induisant des rebuts importants qui pénalisent le coût de fabrication de ces pièces.

Il est donc souhaitable d'utiliser des machines de contrôle automatiques capables de contrôler en continu, en mode dynamique, de façon précise, reproductible et rapide les caractéristiques de la denture de ces pièces, directement sur la ligne de fabrication, permettant ainsi d'asservir, pratiquement en temps réel, la machine à tailler afin de réduire les rebuts au minimum et d'optimiser les coûts de fabrication.

Le contrôle implique nécessairement la vérification des différentes caractéristiques de la denture d'une pièce, de préférence en fonctionnement, c'est-à-dire en mode dynamique. Le contrôle doit permettre de détecter les écarts radiaux liés à l'écart composé radial F"i (faux rond), au saut radial f''i (saut de dents) et à l'entraxe, ainsi que les écarts angulaires liés à l'écart de déviation d'hélice et l'écart d'inclinaison de cône. Lors du contrôle de denture, on cherche également à détecter des chocs que la pièce aurait pu subir lors de manipulations. Ces chocs créent en fonctionnement des vibrations détectables notamment par un contrôle acoustique.

Il existe déjà des machines qui tendent à répondre au besoin de contrôle dynamique des dentures, mais elles ne donnent pas entière satisfaction. Ces machines comportent généralement une broche de précision équipée d'un mandrin expansible qui centre, bride et met en rotation la pièce à contrôler, et deux pignons étalons utilisés pour la mesure et disposés de part et d'autre de la pièce à contrôler : un premier pignon étalon engrené avec la pièce à contrôler sans jeu en contact bi-flanc utilisé pour le contrôle des écarts de composés radiaux, et un second pignon étalon monté sur un support pivotant dans les plans d'inclinaison (cône) et de déviation (hélice), ce pignon étant étagé pour offrir uniquement deux zones de contact situées aux deux extrémités de la largeur fonctionnelle de la denture à contrôler, ce second pignon étant utilisé pour le contrôle des écarts d'hélice et de cône. Un exemple de contrôle dynamique des écarts angulaires par pignon étagé est décrit dans la publication US 7,775,101 et un exemple de contrôle des écarts radiaux est décrit dans la publication US 2006/0254055. Un autre exemple de contrôle dynamique est décrit par le document US4704799.

Cependant ces machines de contrôle sont particulièrement coûteuses. Ceci est d'autant plus vrai, lorsqu'il est nécessaire de prévoir plusieurs pignons étalons pour contrôler en fabrication une diversité importante de pièces. En effet, les pignons étalons doivent être adaptés à chaque module et à chaque hauteur de dent des pièces.

Le montage pivotant du pignon étalon étagé pour contrôler l'angle d'hélice et l'angle de cône pose un problème d'inertie qu'il faut vaincre pour garder le contact avec la denture et pour suivre les écarts d'hélice et de cône pendant la mesure en mode dynamique. Ainsi, les vitesses de rotation doivent être réduites, ce qui ralentit le cycle de contrôle. De plus, le frottement au niveau de la denture peut parasiter la mesure.

L'approximation du résultat obtenu inhérente à la méthode de mesure bi-flanc par le pignon étalon étagé est également un inconvénient majeur. Il s'agit d'une mesure qui donne une valeur moyenne d'écart de l'inclinaison des hélices des deux flancs de la denture et qui se limite à la détection des deux défauts combinés ou non de la conicité et de l'inclinaison des dents, d'où des erreurs d'interprétation. Lesdits défauts ne sont pas individualisés et ne peuvent pas être quantifiés séparément. Ainsi, des roues dentées probablement bonnes peuvent être mises au rebut et inversement. De même, ces résultats approximatifs ne permettent pas d'agir avec précision sur la machine de taille pour palier les défauts relevés.

Par ailleurs, avec cette méthode de mesure, le contact consécutif et simultané du pignon étalon étagé et de la pièce à contrôler sur plusieurs dents à la fois, dû à l'effet de recouvrement de la denture hélicoïdale et à l'inclinaison des génératrices de contact sur les flancs, ne permet pas la lecture d'autres défauts d'hélice dus à un défaut de montage de la pièce sur la machine à tailler.

De plus, la différentiation entre les deux flancs de la denture par inversion du sens de rotation n'est pas garantie. Seul un contrôle des écarts composés tangentiels par engrènement sur un flanc pris au niveau du diamètre nominal de la denture, puis sur l'autre flanc permettrait une mesure différentiée.

Enfin, les pignons étalons de ces machines de contrôle travaillent sans jeu, ce qui ne correspond pas aux conditions normales de fonctionnement de l'engrenage. De fait, les résultats obtenus ne sont pas représentatifs de la réalité.

### Exposé de invention :

La présente invention vise à apporter une solution aux problèmes évoqués ci-dessus en proposant un dispositif de contrôle et un procédé de contrôle dynamique de denture, qui soit simple, économique, précis, reproductible, rapide et complet, qui permette de réduire les coûts de production en utilisant des solutions plus flexibles et plus universelles que les solutions actuelles, dont les coûts d'utilisation sont réduits notamment en limitant le nombre de pignons étalons nécessaire et le nombre d'étalonnages nécessaire lors des changements de production pour fabriquer de nouvelles pièces.

Dans ce but, l'invention concerne un procédé de contrôle du genre indiqué en préambule, caractérisé en ce que l'on utilise un pignon étalon de faible épaisseur par rapport à l'épaisseur de la pièce à contrôler pour réduire au minimum la zone de contact de la denture dudit pignon étalon sur la denture de ladite pièce à contrôler, et en ce que, pour effectuer l'étape de mesure, l'on déplace axialement ledit pignon étalon le long du profil de la denture de ladite pièce à contrôler et en ce que l'on extrait desdites mesures effectuées aussi bien les défauts radiaux que les défauts angulaires de la denture, ces défauts étant différenciés.

De préférence, on déplace le pignon étalon le long du profil de la denture de la pièce à contrôler entre deux zones situées aux extrémités de la largeur fonctionnelle de la denture.

Selon les cas, on peut utiliser un pignon étalon dont la denture est bombée pour tendre vers une zone de contact ponctuelle avec la denture de ladite pièce à contrôler.

De préférence, on choisit l'entraxe entre les deux broches de sorte que l'engrènement du pignon étalon avec la pièce à contrôler s'effectue sur leur diamètre nominal respectif, reproduisant le fonctionnement normal dudit engrenage.

Avant d'effectuer l'étape de mesure proprement dite, on réalise une étape préalable au cours de laquelle on fait tourner les broches jusqu'à obtenir une stabilisation des mesures délivrées par les codeurs.

Dans une première phase de ladite étape de mesure, on peut faire tourner la broche portant le pignon étalon de sorte qu'elle mène la broche portant la pièce à contrôler pour que ledit pignon étalon soit en contact avec un des flancs de la denture pour mesurer les caractéristiques de ce flanc, et, dans une seconde phase de ladite étape de mesure, on peut faire tourner la broche portant le pignon étalon de sorte qu'elle soit menée par la broche portant la pièce à contrôler pour que ledit pignon étalon soit en contact avec l'autre flanc de la denture pour mesurer les caractéristiques de cet autre flanc.

Dans une forme de réalisation préférée du procédé, on effectue ces deux phases de l'étape de mesure sans inverser le sens de rotation desdits broches.

Dans une variante de réalisation dudit procédé, on peut effectuer ces deux phases de l'étape de mesure en inversant le sens de rotation desdits broches.

On peut avantageusement monter au moins une des broches portant le pignon étalon ou la pièce à contrôler sur un chariot mobile en translation perpendiculaire à l'axe des broches pour régler leur entraxe. Selon les besoins, on peut associer au chariot mobile des moyens élastiques agencés pour assujettir le pignon étalon en direction de la pièce à contrôler pour garantir un contact permanent entre eux.

On peut également équiper la broche portant le pignon étalon d'un moyen de contrôle acoustique agencé pour détecter des défauts de la denture dus à des chocs.

Dans ce but, l'invention concerne également un dispositif de contrôle du genre indiqué en préambule, caractérisé en ce que le pignon étalon est un pignon de faible épaisseur par rapport à l'épaisseur de la pièce à contrôler pour réduire au minimum la zone de contact de la denture dudit pignon étalon sur la denture de ladite pièce à contrôler, en ce que l'une au moins de ladite broche portant ledit pignon étalon ou de ladite broche portant ladite pièce à contrôler est embarquée sur un premier chariot mobile en translation parallèle à l'axe desdites broches et agencé pour déplacer ledit pignon étalon le long du profil de la denture de ladite pièce à contrôler et en ce que lesdits moyens de traitement sont agencés pour caractériser aussi bien les défauts radiaux que les défauts angulaires de la denture, ces défauts étant différenciés.

Le pignon étalon peut comporter avantageusement une denture bombée pour tendre vers une zone de contact ponctuelle avec la denture de la pièce à contrôler.

Dans une forme de réalisation préférée, les moyens de pilotage sont agencés pour rendre menant ou menée la broche portant le pignon étalon par rapport à la broche portant la pièce à contrôler en fonction des phases de l'étape de mesure.

Les moyens de pilotage comportent avantageusement un variateur de vitesse pour rendre menant ou menée l'une des broches par rapport à l'autre, et inversement.

En variante de réalisation, ils peuvent comporter un inverseur du sens de rotation pour rendre menant ou menée l'une des broches par rapport à l'autre, et inversement

De manière préférentielle, l'une au moins des broches portant le pignon étalon ou la pièce à contrôler est embarquée sur un second chariot mobile en translation perpendiculaire à l'axe des broches agencé pour régler leur entraxe.

Le chariot mobile peut, selon les variantes de réalisation, comporter des moyens élastiques agencés pour assujettir le pignon étalon en direction de la pièce à contrôler et garantir un contact permanent entre eux. De même, la broche portant le pignon étalon peut comporter des moyens de contrôle acoustique agencés pour détecter des défauts de la denture dus à des chocs.

### Description sommaire des dessins :

La présente invention et ses avantages apparaîtront mieux dans la description suivante d'un mode de réalisation donné à titre d'exemple non limitatif, en référence aux dessins annexés, dans lesquels:
- la figure 1 représente schématiquement l'implantation d'une machine de contrôle selon l'invention sur une ligne de fabrication de pièces dentées, et
- la figure 2 est une vue schématisée de la machine de contrôle en tant que telle. Illustrations de l'invention et meilleure manière de la réaliser :

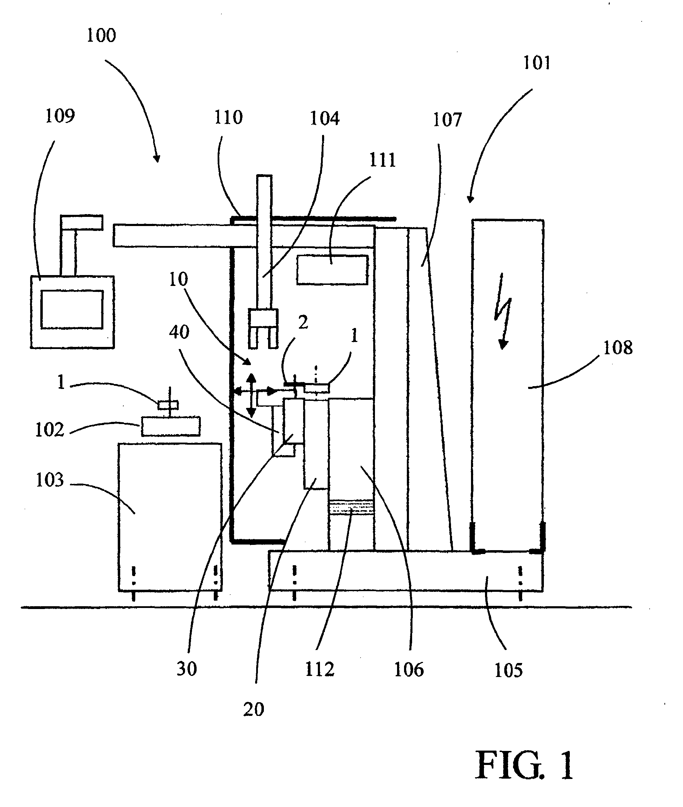

Le dispositif de contrôle 10 selon l'invention peut constituer une machine indépendante ou intégrée à une ligne de fabrication 100 de pièces 1, comme l'exemple d'implantation représenté à la figure 1, ces pièces pouvant être des roues dentées, des pignons dentés, des arbres dentés ou similaires. Les pièces 1 sont acheminées vers un poste de contrôle 101 par un convoyeur 102 porté par un châssis 103. Le poste de contrôle 101 comporte un manipulateur ou un robot 104 pour le chargement des pièces 1 dans le dispositif de contrôle 10 depuis le convoyeur 102. Ce poste de contrôle 101 comporte une base machine 105 qui reçoit un bâti 106 sur lequel est monté le dispositif de contrôle 10. La base machine 105 regroupe, autour d'un châssis standard 107, les équipements de base d'une machine autres que ceux liés à l'opération de contrôle, à savoir une armoire électrique 108, un pupitre interface homme/machine 109, des carters de protection 110, une centrale pneumatique (non représentée) et un éclairage 111. Le bâti 106 dédié au dispositif de contrôle 10 est fixé sur la base machine 105 en appui sur des éléments anti-vibratiles 112.

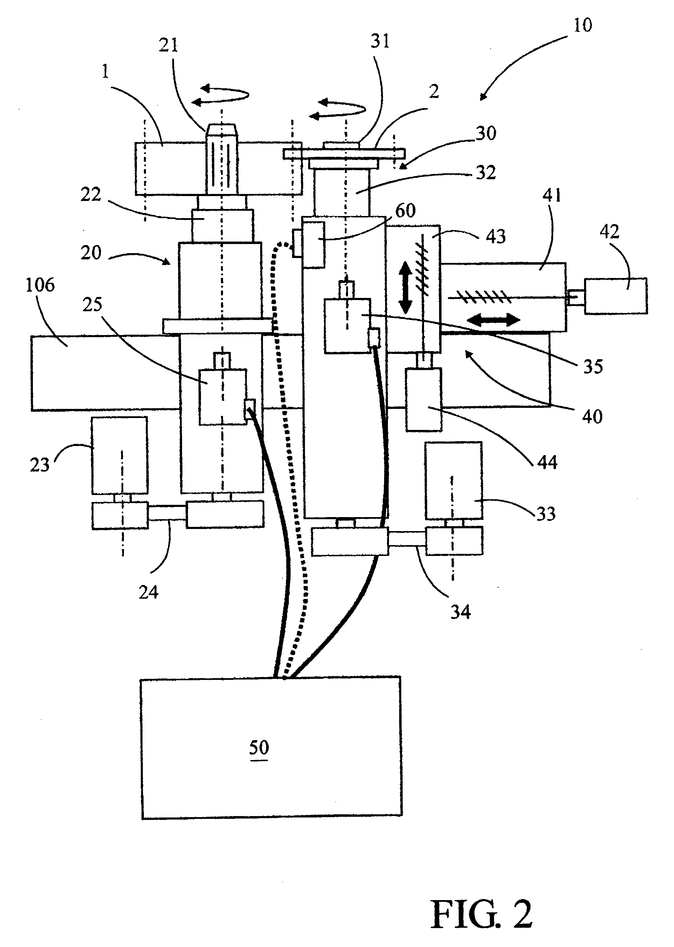

En référence également à la figure 2, le dispositif de contrôle 10 selon l'invention comporte au moins :
- une première unité de rotation 20 équipée d'un mandrin expansible 21 pour la prise, le serrage et la mise en rotation des pièces à contrôler 1,
- une seconde unité de rotation 30 pourvue d'un pignon étalon 2 utilisé pour la mesure, et montée sur un chariot croisé numérique 40, et
- une unité électronique de mesure 50.

Dans l'exemple représenté, les unités de rotation 20, 30 et le chariot croisé 40 sont portés par le châssis 106. L'unité de rotation 20 comporte une broche 22 entraînée en rotation par un moteur 23 et une transmission 24. La broche 22 est équipée d'un mandrin expansible 21 qui centre et bride la pièce à contrôler 1. Le serrage du mandrin expansible 21 garantit la liaison angulaire de la pièce à contrôler sur la broche 22. L'angle parcouru par la broche 22 pendant sa rotation est mesuré par un codeur 25.

L'unité de rotation 30 comporte une broche 32 entraînée en rotation par un moteur 33 et une transmission 34. La broche 32 est équipée d'un mandrin 31 qui centre et bride un pignon étalon 2. Le serrage du mandrin 31 garantit la liaison angulaire du pignon étalon 2 sur la broche 32. L'angle parcouru par la broche 32 pendant sa rotation est mesuré par un codeur 35. Le pignon étalon 2 utilisé pour la mesure présente une très faible épaisseur par rapport à celle de la pièce à contrôler 1 et s'apparente à un disque pour offrir une zone de contact avec la pièce à contrôler 1 faible voire ponctuelle, si la denture dudit pignon étalon 2 est bombée.

Pour la qualité, la fiabilité et la précision des mesures, on choisira du matériel de précision pour les mandrins 21, 31, les broches 22, 32, les moteurs 23, 33 et les transmissions 24, 34. Les moteurs 23, 33 peuvent être pilotés par des moyens centralisés dans l'armoire électrique 108 ou dans l'unité électronique de mesure 50.

Les codeurs 25 et 35 sont reliés à une unité électronique de mesure 50 qui récupère les informations délivrées par ces codeurs, effectue leur traitement par analyse et comparaison au moyen d'un calculateur et délivre des résultats représentatifs des défauts de denture détectés sur la pièce 1 contrôlée.

Le chariot croisé 40 comporte, dans l'exemple représenté, un chariot horizontal 41 entraîné en translation horizontale par un premier actionneur 42. Ce chariot horizontal 41 porte un chariot vertical 43 entraîné en translation verticale par un second actionneur 44. Ce chariot vertical 43 porte la seconde unité de rotation 30 sur laquelle est fixé le pignon étalon 2. Bien entendu, ce mode de réalisation n'est pas limitatif. Dans un autre mode de réalisation (non représenté), le chariot croisé peut être remplacé par deux chariots distincts, l'un vertical portant la première unité de rotation 20 et l'autre horizontal portant la seconde unité de rotation 30, ou inversement. Toute autre configuration permettant de déplacer les unités de rotation 20 et 30 l'une par rapport à l'autre pour, d'une part, ajuster l'entraxe entre les deux broches 22 et 32, et d'autre part, faire circuler le pignon étalon 2 le long de la denture de la pièce à contrôler 1 pour effectuer la mesure, est envisageable. Dans une variante non représentée, le chariot horizontal 41 peut coopérer avec des moyens élastiques agencés pour assujettir le pignon étalon 2 en direction de la pièce à contrôler 1 et garantir ainsi un contact permanent entre eux. Cette configuration est nécessaire si l'on souhaite effectuer une mesure en fond de denture et non plus sur le diamètre nominal de la pièce à contrôler 1.

Les actionneurs 42 et 44 peuvent être constitués de moteurs entraînant des vis sans fin en prise avec un écrou solidaire des chariots, ces chariots pouvant être guidés sur des chemins de roulement. Bien entendu tout autre mode de réalisation équivalent est envisageable. Ces actionneurs 42, 44 peuvent être pilotés par des moyens centralisés dans l'armoire électrique 108 ou dans l'unité électronique de mesure 50.

La broche 32 de la seconde unité de rotation 30 peut être équipée d'un accéléromètre 60 pour mesurer l'accélération radiale générée par la rotation de l'engrenage constitué par la pièce à contrôler 1 et le pignon étalon 2 afin d'effectuer un contrôle acoustique. Cette option permet de détecter sur la pièce à contrôler 1 les éventuels défauts dus à des chocs. L'accéléromètre 60 est relié à l'unité électronique de mesure 50.

Le mode de fonctionnement du dispositif de contrôle 10 est décrit ci-après. Le procédé de contrôle dynamique selon l'invention consiste à faire engrener la pièce à contrôler 1 avec un pignon étalon 2 de mesure et à mettre ainsi cette pièce à contrôler 1 en conditions normales d'utilisation dans un engrenage. Dans cette configuration, la pièce à contrôler 1 et le pignon étalon 2 engrène sur leur diamètre nominal.

La pièce à contrôler 1 est centrée et bridée sur le mandrin expansible 21 à l'extrémité de la broche 22. Le pignon étalon 2 est également centré et bridé sur le mandrin 31 à l'extrémité de la broche 32. Le chariot croisé 40 permet d'une part la mise à l'entraxe de l'engrenage correspondant à un fonctionnement normal, dans lequel l'engrènement s'effectue sur le diamètre nominal des roues dentées, et d'autre part le positionnement du pignon étalon 2 le long de la denture de la pièce à contrôler 1, au minimum dans deux zones situées aux deux extrémités de la largeur fonctionnelle de la denture.

Le chariot croisé 40 sert à créer un mouvement relatif entre les deux broches 22 et 32 suivant deux directions : un mouvement parallèle à l'axe des broches 22 et 32 pour déplacer le pignon étalon 2 sur toute ou une partie de la denture de la pièce à contrôler 1 entre ses deux extrémités, et un mouvement perpendiculaire à l'axe des broches 22 et 32 pour la mise à l'entraxe de l'engrenage.

Lorsque le pignon étalon 2 est en position engrenée à l'entraxe de fonctionnement de l'engrenage, c'est à dire sur le diamètre nominal de la pièce à contrôler 1, et à une des extrémités de la denture, l'engrenage est mis en rotation selon le principe menant/mené, c'est à dire avec une vitesse de rotation du pignon étalon 2 légèrement supérieure ou inférieure à celle de la pièce à contrôler 1 pour rendre menant ou menée la broche 32 portant le pignon étalon 2 ou la broche 22 portant la pièce à contrôler 1, et ceci sans inverser le sens de rotation. Le but est de garantir un contact mono flanc avec un asservissement du couple pour limiter l'effort de contact, à savoir un contact sur un seul des flancs de la denture puis sur l'autre flanc. Les angles parcourus respectivement par la pièce à contrôler 1 et le pignon étalon 2 sont enregistrés sur au moins un tour. La mesure est réalisée en dynamique en deux phases, sur un des flancs de la denture à différentes hauteurs, et au minimum aux deux extrémités de la largeur fonctionnelle de la denture, puis sur l'autre flanc de la denture par modification de la vitesse de rotation du pignon étalon 2 avec asservissement du couple pour limiter l'effort de contact. La mesure peut s'effectuer par points pris tout au long du profil de la denture, ou au minimum aux deux points situés aux deux extrémités de la largeur fonctionnelle de la denture.

Avant d'effectuer la prise de mesure proprement dite, on peut faire tourner l'engrenage pendant un laps de temps nécessaire à la stabilisation des mesures délivrées par les codeurs 25 et 35. Cette phase préalable de stabilisation permet d'éviter les aberrations dans les mesures.

Dans une variante du procédé de contrôle, on peut obtenir les mêmes résultats en inversant le sens de rotation et en utilisant le principe menant/mené du pignon étalon 2 par rapport à la pièce à contrôler 1. Toutefois, cette solution est moins favorable puisqu'elle rallonge le temps de contrôle.

Les écarts de composés radiaux de même que les écarts d'hélice et de cône sont ensuite déterminés par calcul avec un logiciel approprié, à partir des valeurs d'angle délivrées par les codeurs 25 et 35 et enregistrées par l'unité électronique de mesure 50 sur toute ou partie de la largeur de la denture. Le traitement et les calculs sont réalisés pendant la rotation de l'engrenage en temps réel. Ensuite, ces résultats sont transmis à la ligne de fabrication des pièces afin de corriger les défauts détectés.

Ce procédé de contrôle présente plusieurs avantages :
- il permet le contrôle individualisé des écarts composés radiaux et des écarts d'hélice et de cône,
- il permet d'ajouter le contrôle des chocs,
- il permet une mesure dynamique mono flanc qui assure des résultats fiables,
- il permet de réaliser cette mesure dynamique mono flanc sans changement de sens de rotation, d'où un gain de temps de contrôle (sauf pour le cas où l'on choisit d'inverser le sens de rotation),
- un pignon étalon 2 unique permet de contrôler des dentures de même module et de hauteur différente, ce qui réduit considérablement le nombre de pignons étalons 2 et les temps d'étalonnage nécessaires lors d'un changement de production.

### Possibilités d'application industrielle :

Il ressort clairement de cette description que l'invention permet d'atteindre les buts fixés et est réalisable industriellement.

La présente invention n'est pas limitée à l'exemple de réalisation décrit mais s'étend à toute modification et variante évidentes pour un homme du métier tout en restant dans l'étendue de la protection définie dans les revendications annexées.

Notamment, les broches 22 et 32 peuvent être disposées en opposition. L'axe des broches 22 et 23 peut être aussi bien vertical, comme dans l'exemple illustré, ou horizontal.

## Revendications

1. Procédé de contrôle dynamique de la denture d'une pièce (1) définie au moins par son module, son diamètre nominal et son profil de dents, procédé dans lequel on monte ladite pièce à contrôler (1) sur une première broche (22) motorisée et contrôlée angulairement par un premier codeur (25), on monte un pignon étalon (2) sur une seconde broche (32) motorisée et contrôlée angulairement par un second codeur (35), les deux broches étant parallèles et séparées d'un entraxe permettant au pignon étalon d'engrener la pièce à contrôler, on mesure les écarts angulaires entre les deux broches en utilisant les informations délivrées par les codeurs, on traite lesdites informations par un calculateur et on déduit de ces écarts d'éventuels défauts de la denture, **caractérisé en ce que** l'on utilise un pignon étalon (2) de faible épaisseur par rapport à l'épaisseur de la pièce à contrôler (1) pour réduire au minimum la zone de contact de la denture dudit pignon étalon sur la denture de ladite pièce à contrôler, et **en ce que**, pour effectuer l'étape de mesure, l'on déplace axialement ledit pignon étalon (2) le long du profil de la denture de ladite pièce à contrôler (1), et **en ce que** l'on extrait desdites mesures effectuées, aussi bien les défauts radiaux que les défauts angulaires de la denture, ces défauts étant différenciés.

2. Procédé de contrôle selon la revendication 1, **caractérisé en ce que** l'on déplace le pignon étalon (2) le long du profil de la denture de ladite pièce à contrôler (1) entre deux zones situées aux extrémités de la largeur fonctionnelle de la denture.

3. Procédé de contrôle selon la revendication 1, **caractérisé en ce que** l'on utilise un pignon étalon (2) dont la denture est bombée pour tendre vers une zone de contact ponctuelle avec la denture de ladite pièce à contrôler (1).

4. Procédé de contrôle selon la revendication 1, **caractérisé en ce que** l'on choisit ledit entraxe entre les deux broches (22, 32) de sorte que l'engrènement dudit pignon étalon (2) avec ladite pièce à contrôler (1) s'effectue sur leur diamètre nominal respectif, reproduisant le fonctionnement normal dudit engrenage.

5. Procédé de contrôle selon la revendication 1, **caractérisé en ce qu'**avant d'effectuer l'étape de mesure proprement dite, on réalise une étape préalable au cours de laquelle on fait tourner lesdites broches (22, 32) jusqu'à obtenir une stabilisation des mesures délivrées par les codeurs (25, 35).

6. Procédé de contrôle selon l'une quelconque des revendications précédentes, **caractérisé en ce que**, dans une première phase de ladite étape de mesure, on fait tourner la broche (32) portant le pignon étalon (2) de sorte qu'elle mène la broche (22) portant la pièce à contrôler (1), ou inversement, pour que ledit pignon étalon (2) soit en contact avec un des flancs de la denture pour mesurer les caractéristiques de ce flanc, et **en ce que**, dans une seconde phase de ladite étape de mesure, on fait tourner la broche (32) portant le pignon étalon (2) de sorte qu'elle soit menée par la broche (22) portant la pièce à contrôler (1), ou inversement, pour que ledit pignon étalon (2) soit en contact avec l'autre flanc de la denture pour mesurer les caractéristiques de cet autre flanc.

7. Procédé de contrôle selon la revendication 6, **caractérisé en ce que** l'on effectue ces deux phases de l'étape de mesure sans inverser le sens de rotation desdits broches.

8. Procédé de contrôle selon la revendication 6, **caractérisé en ce que** l'on effectue ces deux phases de l'étape de mesure en inversant le sens de rotation desdits broches.

9. Procédé de contrôle selon l'une quelconque des revendications précédentes, **caractérisé en ce que** l'on monte au moins une des broches (22, 32) portant ledit pignon étalon (2) ou ladite pièce à contrôler (1) sur un chariot mobile (41) en translation perpendiculaire à l'axe desdites broches (22, 32) pour régler leur entraxe.

10. Procédé de contrôle selon la revendication 9, **caractérisé en ce que** l'on associe audit chariot mobile (41) des moyens élastiques agencés pour assujettir ledit pignon étalon (2) en direction de ladite pièce à contrôler (1) pour garantir un contact permanent entre eux.

11. Procédé de contrôle selon la revendication 1, **caractérisé en ce que** l'on équipe ladite broche (32) portant ledit pignon étalon (2) de moyens de contrôle acoustique (60) agencé pour détecter des défauts de ladite denture dus à des chocs.

12. Dispositif de contrôle (10) dynamique de la denture d'une pièce (1) définie au moins par son module, son diamètre nominal et son profil de dents, ledit dispositif comportant une première broche (22) couplée à une motorisation (23, 24) et contrôlée angulairement par un premier codeur (25) sur laquelle est montée ladite pièce à contrôler (1), une seconde broche (32) couplée à une motorisation (33, 34) et contrôlée angulairement par un second codeur (35) sur laquelle est montée un pignon étalon (2), les deux broches (22, 32) étant parallèles et séparées d'un entraxe permettant au pignon étalon (2) d'engrener la pièce à contrôler (1), des moyens de pilotage desdites motorisations et des moyens de traitement des informations délivrées par les codeurs agencés pour caractériser d'éventuels défauts de la denture, **caractérisé en ce que** ledit pignon étalon (2) est un pignon de faible épaisseur par rapport à l'épaisseur de la pièce à contrôler (1) pour réduire au minimum la zone de contact de la denture dudit pignon étalon sur la denture de ladite pièce à contrôler, **en ce que** l'une au moins de ladite broche (32) portant ledit pignon étalon (2) ou de ladite broche (22) portant ladite pièce à contrôler (1) est embarquée sur un premier chariot (43) mobile en translation parallèle à l'axe desdites broches (22, 32) et agencé pour déplacer ledit pignon étalon (2) le long du profil de la denture de ladite pièce à contrôler (1), et **en ce que** lesdits moyens de traitement sont agencés pour caractériser aussi bien les défauts radiaux que les défauts angulaires de la denture, ces défauts étant différenciés.

13. Dispositif de contrôle selon la revendication 12, **caractérisé en ce que** ledit pignon étalon (2) comporte une denture bombée pour tendre vers une zone de contact ponctuelle avec la denture de ladite pièce à contrôler (1).

14. Dispositif de contrôle selon la revendication 12, **caractérisé en ce que** lesdits moyens de pilotage sont agencés pour rendre menant ou menée ladite broche (32) portant le pignon étalon (2) par rapport à la broche (22) portant la pièce à contrôler (1), ou inversement, en fonction des phases de ladite étape de mesure.

15. Dispositif de contrôle selon la revendication 14, **caractérisé en ce que** lesdits moyens de pilotage comportent un variateur de vitesse pour rendre menant ou menée l'une des broches par rapport à l'autre, et inversement.

16. Dispositif de contrôle selon la revendication 14, **caractérisé en ce que** lesdits moyens de pilotage comportent un inverseur du sens de rotation pour rendre menant ou menée l'une des broches par rapport à l'autre, et inversement.

17. Dispositif de contrôle selon l'une quelconque des revendications 12 à 16, **caractérisé en ce que** l'une au moins des broches (22, 32) portant ledit pignon étalon (2) ou ladite pièce à contrôler (1) est embarquée sur un second chariot (41) mobile en translation perpendiculaire à l'axe desdites broches (22, 32) agencé pour régler leur entraxe.

18. Dispositif de contrôle selon la revendication 17, **caractérisé en ce que** ledit second chariot (41) comporte des moyens élastiques agencés pour assujettir ledit pignon étalon (2) en direction de ladite pièce à contrôler (1) et garantir un contact permanent entre eux.

19. Dispositif de contrôle selon la revendication 12, **caractérisé en ce que** ladite broche (32) portant ledit pignon étalon (2) comporte des moyens de contrôle acoustique (60) agencés pour détecter des défauts de ladite denture dus à des chocs.

## Patentansprüche

1. Verfahren zur dynamischen Kontrolle der Zähne eines zumindest durch sein Modul, seinen Nenndurchmesser und sein Zahnprofil definierten Werkstücks (1), Verfahren in dem man das besagte zu kontrollierende Werkstück (1) auf eine motorisierte und durch einen ersten Drehgeber (25) winklig überwachte erste Spindel (22) montiert, man ein Lehrzahnrad (2) auf eine motorisierte und durch einen zweiten Drehgeber (35) winklig überwachte zweite Spindel (32) montiert, wobei die beiden Spindeln parallel sind und um einen Achsabstand getrennt sind, der dem Lehrzahnrad erlaubt, in das zu kontrollierende Werkstück einzugreifen, man mit Hilfe der von den Drehgebern gelieferten Informationen die Winkelabweichungen zwischen den beiden Spindeln misst, man die besagten Informationen mit einem Rechner verarbeitet und von diesen Abweichungen mögliche Mängel an der Verzahnung ableitet, **dadurch gekennzeichnet, dass** man ein Lehrzahnrad (2) mit einer im Vergleich zur Dicke des zu kontrollierenden Werkstücks (1) geringen Dicke verwendet, um die Berührungsfläche der Verzahnung des besagten Lehrzahnrads auf der Verzahnung des besagten zu kontrollierenden Werkstücks auf ein Minimum zu reduzieren, dadurch, dass, um den Mess-Schritt durchzuführen, man das besagte Lehrzahnrad (2) axial entlang des Profils der Verzahnung des besagten zu kontrollierenden Werkstücks (1) bewegt, und dadurch, dass man von den besagten durchgeführten Messungen sowohl die Radialfehler als auch die Winkelfehler der Verzahnung gewinnt, wobei diese Fehler differenziert werden.

2. Kontrollverfahren nach Anspruch 1, **dadurch gekennzeichnet, dass** man das Lehrzahnrad (2) entlang des Profils der Verzahnung zwischen zwei an den Enden der funktionellen Breite der Verzahnung befindlichen Bereichen des besagten zu kontrollierenden Werkstücks (1) bewegt.

3. Kontrollverfahren nach Anspruch 1, **dadurch gekennzeichnet, dass** man ein Lehrzahnrad (2) mit einer balligen Verzahnung verwendet, um gegen eine punktförmige Berührungsfläche mit der Verzahnung des besagten zu kontrollierenden Werkstücks (1) zu tendieren.

4. Kontrollverfahren nach Anspruch 1, **dadurch gekennzeichnet, dass** man den besagten Achsabstand zwischen den beiden Spindeln (22, 32) so wählt, dass das Eingreifen des besagten Lehrzahnrads (2) in das besagte zu kontrollierende Werkstück (1) auf deren Nenndurchmessern stattfindet, um den normalen Betrieb des besagten Eingriffs zu reproduzieren.

5. Kontrollverfahren nach Anspruch 1, **dadurch gekennzeichnet, dass**, vor dem eigentlichen Schritt der Messung, man einen vorhergehenden Schritt ausführt, in dem man die besagten Spindeln (22, 32) drehen lässt, bis die von den Drehgebern (25, 35) gelieferten Messungen stabilisiert sind.

6. Kontrollverfahren nach einem beliebigen der vorhergehenden Ansprüche, **dadurch gekennzeichnet, dass** man in einer ersten Phase des besagten Mess-Schritts die Spindel (32) mit dem Lehrzahnrad (2) so drehen lässt, dass sie die Spindel (22) mit dem zu kontrollierenden Werkstück (1) antreibt, oder umgekehrt, damit das besagte Lehrzahnrad (2) mit einer der Flanken der Verzahnung in Berührung kommt um die Eigenschaften dieser Flanke zu messen und dadurch, dass man in einer zweiten Phase des besagten Mess-Schritts die Spindel (32) mit dem Lehrzahnrad (2) so drehen lässt, dass sie von der Spindel (22) mit dem zu kontrollierenden Werkstück (1) angetrieben wird, oder umgekehrt, damit das besagte Lehrzahnrad (2) mit der anderen Flanke der Verzahnung in Berührung kommt um die Eigenschaften dieser anderen Flanke zu messen.

7. Kontrollverfahren nach Anspruch 6, **dadurch gekennzeichnet, dass** man diese beiden Phasen des Mess-Schritts ausführt ohne die Drehrichtung der besagten Spindeln umzukehren.

8. Kontrollverfahren nach Anspruch 6, **dadurch gekennzeichnet, dass** man diese beiden Phasen des Mess-Schritts mit Umkehrung der Drehrichtung der besagten Spindeln ausführt.

9. Kontrollverfahren nach einem beliebigen der vorhergehenden Ansprüche, **dadurch gekennzeichnet, dass** man zumindest eine der Spindeln (22, 32), die das besagte Lehrzahnrad (2) oder das besagte zu kontrollierende Werkstück (1) tragen, auf einen senkrecht zur Achse der besagten Spindeln (22, 32) translationsbeweglichen Schlitten (41) montiert.

10. Kontrollverfahren nach Anspruch 9, **dadurch gekennzeichnet, dass** man den besagten beweglichen Schlitten (41) mit elastischen Mitteln ausstattet, die ausgelegt sind, um das besagte Lehrzahnrad (2) in Richtung des besagten zu kontrollierenden Werkstücks (1) zu beaufschlagen, um eine ständige Berührung zwischen den beiden zu sichern.

11. Kontrollverfahren nach Anspruch 1, **dadurch gekennzeichnet, dass** man die besagte Spindel (32) die das besagte Lehrzahnrad (2) trägt mit akustischen Prüfmitteln (60) ausrüstet, die ausgelegt sind, um auf Schläge zurückzuführende Mängel der besagten Verzahnung festzustellen.

12. Überprüfungsvorrichtung (10) zur dynamischen Kontrolle der Zähne eines zumindest durch sein Modul, seinen Nenndurchmesser und sein Zahnprofil definierten Werkstücks (1), wobei die besagte Vorrichtung eine mit einer Motorisierung (23, 24) gekoppelte und durch einen ersten Drehgeber (25) winklig überwachte erste Spindel (22) beträgt, die das besagte zu kontrollierende Werkstück (1) trägt, sowie eine mit einer Motorisierung (33, 34) gekoppelte und durch einen zweiten Drehgeber (35) winklig überwachte zweite Spindel (32), die ein Lehrzahnrad (2) trägt, wobei die beiden Spindeln (22, 32) parallel sind und um einen Achsabstand getrennt sind, der dem Lehrzahnrad (2) erlaubt, in das zu kontrollierende Werkstück (1) einzugreifen, Mittel zur Steuerung der besagten Motorisierungen und Mittel zur Verarbeitung der von den Drehgebern gelieferten Informationen, die ausgelegt sind, um eventuelle Mängel der Verzahnung zu bestimmen, **dadurch gekennzeichnet, dass** das besagte Lehrzahnrad (2) ein Zahnrad mit einer im Vergleich zur Dicke des zu kontrollierenden Werkstücks (1) geringen Dicke ist, um die Berührungsfläche der Verzahnung des besagten Lehrzahnrads auf der Verzahnung des besagten zu kontrollierenden Werkstücks auf ein Minimum zu reduzieren, dadurch, dass zumindest eine der besagten Spindel (32), die das besagte Lehrzahnrad (2) trägt oder der besagten Spindel (22), die das besagte zu kontrollierende Werkstück (1) trägt, auf einen ersten parallel zur Achse der besagten Spindeln (22, 32) translationsbeweglichen Schlitten (43) montiert ist, der ausgelegt ist, um das besagte Lehrzahnrad (2) entlang des Profils der Verzahnung des besagten zu kontrollierenden Werkstücks (1) zu bewegen, und dadurch, dass die besagten Mittel zur Verarbeitung ausgelegt sind, um sowohl die Radialfehler als auch die Winkelfehler der Verzahnung zu bestimmen, wobei diese Fehler differenziert werden.

13. Überprüfungsvorrichtung nach Anspruch 12, **dadurch gekennzeichnet, dass** das besagte Lehrzahnrad (2) eine ballige Verzahnung aufweist, um gegen eine punktförmige Berührungsfläche mit der Verzahnung des besagten zu kontrollierenden Werkstücks (1) zu tendieren.

14. Überprüfungsvorrichtung nach Anspruch 12, **dadurch gekennzeichnet, dass** die besagten Mittel zur Steuerung ausgelegt sind, um die besagte Spindel (32), die das Lehrzahnrad (2) trägt, in Bezug auf die besagte Spindel (22), die das zu kontrollierende Werkstück (1) trägt, je nach den Phasen des Mess-Schritts, als Antrieb oder als Abtrieb einzustellen.

15. Überprüfungsvorrichtung nach Anspruch 14, **dadurch gekennzeichnet, dass** die besagten Mittel zur Steuerung einen Drehzahlregler aufweisen, um eine der Spindeln in Bezug auf die andere als Antrieb oder als Abtrieb einzustellen und umgekehrt.

16. Überprüfungsvorrichtung nach Anspruch 14, **dadurch gekennzeichnet, dass** die besagten Mittel zur Steuerung einen Drehrichtungs-Umschalter aufweisen, um eine der Spindeln in Bezug auf die andere als Antrieb oder als Abtrieb einzustellen und umgekehrt.

17. Kontrollverfahren nach einem beliebigen der Ansprüche 12 bis 16, **dadurch gekennzeichnet, dass** zumindest eine der Spindeln (22, 32), die das besagte Lehrzahnrad (2) oder das besagte zu kontrollierende Werkstück (1) tragen, auf einen zweiten senkrecht zur Achse der besagten Spindeln (22, 32) translationsbeweglichen Schlitten (41) montiert ist, um deren Achsabstand einzustellen..

18. Kontrollverfahren nach Anspruch 17, **dadurch gekennzeichnet, dass** der besagte zweite bewegliche Schlitten (41) mit elastischen Mitteln ausgestattet ist, die ausgelegt sind, um das besagte Lehrzahnrad (2) in Richtung des besagten zu kontrollierenden Werkstücks (1) zu beaufschlagen und eine ständige Berührung zwischen den beiden zu sichern.

19. Überprüfungsvorrichtung nach Anspruch 12, **dadurch gekennzeichnet, dass** die besagte Spindel (32), die das besagte Lehrzahnrad (2) trägt, mit akustischen Prüfmitteln (60) ausgerüstet ist, die ausgelegt sind, um auf Schläge zurückzuführende Mängel der Verzahnung festzustellen.

## Claims

1. Method for dynamically checking the teeth of a part (1) defined at least by its module, its nominal diameter and its tooth profile, method in which one mounts said part (1) to be checked on a first motorized spindle (22) controlled angularly by a first encoder (25), one mounts a master pinion (2) on a second motorized spindle (32) controlled angularly by a second encoder (35), the two spindles being parallel and separated by a center distance that allows the master pinion to mesh with the part to be checked, one measures the angular deviations between the two spindles using the information supplied by the encoders, one processes said information by a calculator and one deduces the possible defects of the teeth from these deviations, **characterized in that** one uses a master pinion (2) with a small thickness compared to the thickness of the part (1) to be checked so as to minimize the contact area of the teeth of said master pinion on the teeth of said part to be checked, and **in that**, to carry out the measuring step, one moves axially said master pinion (2) along the profile of the teeth of said part (1) to be checked, and **in that** one extracts from said performed measurements both the radial defects and the angular defects of the teeth, these defects being differentiated.

2. Method for checking according to claim 1, **characterized in that** one moves the master pinion (2) along the profile of the teeth of said part (1) to be checked between two areas located at the ends of the functional width of the teeth.

3. Method for checking according to claim 1, **characterized in that** one uses a master pinion (2) with curved teeth so as to tend towards a punctiform contact area with the teeth of said part (1) to be checked.

4. Method for checking according to claim 1, **characterized in that** one chooses said center distance between the two spindles (22, 32) so that the meshing of said master pinion (2) with said part (1) to be checked takes place on their respective nominal diameter, reproducing the normal operation of said gear.

5. Method for checking according to claim 1, **characterized in that**, before carrying out the measuring step itself, one performs a previous step in which one makes said spindles (22, 32) rotate until obtaining a stabilization of the measurements provided by the encoders (25, 35).

6. Method for checking according to any of the previous claims, **characterized in that**, in a first phase of said measuring step, one makes rotate the spindle (32) carrying the master pinion (2) so that it drives the spindle (22) carrying the part (1) to be checked, or conversely, so that said master pinion (2) is in contact with one of the flanks of the teeth in order to measure the characteristics of this flank, and **in that**, in a second phase of said measuring step, one makes rotate the spindle (32) carrying the master pinion (2) so that it is driven by the spindle (22) carrying the part (1) to be checked, or conversely, so that said master pinion (2) is in contact with the other flank of the teeth in order to measure the characteristics of this other flank.

7. Method for checking according to claim 6, **characterized in that** one performs these two phases of the measuring step without reversing the direction of rotation of said spindles.

8. Method for checking according to claim 6, **characterized in that** one performs these two phases of the measuring step reversing the direction of rotation of said spindles.

9. Method for checking according to any of the previous claims, **characterized in that** one mounts at least one of the spindles (22, 32) carrying said master pinion (2) or said part (1) to be checked on a carriage (41) movable in translation perpendicularly to the axis of said spindles (22, 32) in order to adjust their center distance.

10. Method for checking according to claim 9, **characterized in that** one associates to said mobile carriage (41) elastic means arranged to subject said master pinion (2) towards said part (1) to be checked in order to ensure a permanent contact between them.

11. Method for checking according to claim 1, **characterized in that** one fits said spindle (32) carrying said master pinion (2) with acoustic inspection means (60) arranged to detect defects of said teeth due to shocks.

12. Device (10) for dynamically checking the teeth of a part (1) defined at least by its module, its nominal diameter and its tooth profile, said device comprising a first spindle (22) coupled with a motorization (23, 24) and controlled angularly by a first encoder (25), spindle on which said part (1) to be checked is mounted, a second spindle (32) coupled with a motorization (33, 34) and controlled angularly by a second encoder (35), spindle on which a master pinion (2) is mounted, the two spindles (22, 32) being parallel and separated by a center distance that allows the master pinion (2) to mesh with the part (1) to be checked, means for controlling said motorizations and means for processing the information provided by the encoders arranged to characterize possible defects of the teeth, **characterized in that** said master pinion (2) is a pinion with a small thickness compared to the thickness of the part (1) to be checked so as to minimize the contact area of the teeth of said master pinion on the teeth of said part to be checked, **in that** at least one of said spindle (32) carrying said master pinion (2) or said spindle (22) carrying said part (1) to be checked is mounted on board of a first carriage (43) movable in translation parallel to the axis of said spindles (22, 32) and that is arranged to move said master pinion (2) along the profile of the teeth of said part (1) to be checked, and **in that** said processing means are arranged to characterize both the radial defects and the angular defects of the teeth, these defects being differentiated.

13. Device for checking according to claim 12, **characterized in that** said master pinion (2) comprises curved teeth so as to tend towards a punctiform contact area with the teeth of said part (1) to be checked.

14. Device for checking according to claim 12, **characterized in that** said movement control means are arranged so as to make said spindle (32) carrying the master pinion (2) driving or driven with respect to the spindle (22) carrying the part (1) to be checked, in function of the phases of said measuring step.

15. Device for checking according to claim 14, **characterized in that** said movement control means comprise a variable speed control so as to make one of the spindles driving or driven with respect to the other, and vice-versa.

16. Device for checking according to claim 14, **characterized in that** said movement control means comprise a rotation reversal control so as to make one of the spindles driving or driven with respect to the other, and vice-versa.

17. Device for checking according to any of claims 12 to 16, **characterized in that** at least one of the spindles (22, 32) carrying said master pinion (2) or said part (1) to be checked is mounted on a second carriage (41) movable in translation perpendicularly to the axis of said spindles (22, 32) in order to adjust their center distance.

18. Device for checking according to claim 17, **characterized in that** said second carriage (41) comprises elastic means arranged to subject said master pinion (2) towards said part (1) to be checked in order to ensure a permanent contact between them.

19. Device for checking according to claim 12, **characterized in that** said spindle (32) carrying said master pinion (2) comprises acoustic inspection means (60) arranged to detect defects of said teeth due to shocks.
